# EUROPEAN PATENT APPLICATION

(11) **EP 4 600 293 A1**
(43) Date of publication of application: **13.08.2025**
(21) Application number: 22965802.6
(22) Date of filing: 16.11.2022
(51) Int. Cl.: C08J 11/00

(54) **PYROLYSIS SYSTEM AND WASTE PLASTIC PYROLYSIS SYSTEM**

(71) Applicant: The Japan Steel Works, Ltd., Tokyo 141-0032 (JP)
(72) Inventor: SAGA, Daigo, Tokyo 141-0032 (JP)
(74) Representative: Simmons & Simmons LLP (Munich)
(86) International application number: PCT/JP2022/042619
(87) International publication number: WO 2024/105826

(57) **Abstract**

A residue tank 102 can be efficiently replaced. A pyrolysis system 10 includes an extruder 12, a buffer chamber 26, a flow path unit 52, a residue tank 102, and a conveyance unit 72. The extruder 12 pyrolyzes a waste plastic P. The buffer chamber 26 stores a residue R after the pyrolysis. The flow path unit 52 receives the residue R from the buffer chamber 26. The residue tank 102 collects the residue R discharged from the flow path unit 52. The conveyance unit 72 conveys the residue R received from the buffer chamber 26 toward the residue tank 102.

## Description

### TECHNICAL FIELD

This disclosure relates to a pyrolysis system and a pyrolysis system for a waste plastic.

### BACKGROUND ART

Patent Document 1 discloses an extruder configured to pyrolyze polymers.

### RELATED ART DOCUMENTS

### PATENT DOCUMENTS

Patent Document 1: Japanese Unexamined Patent Application Publication No. 2022-127346

### SUMMARY OF THE INVENTION

### PROBLEMS TO BE SOLVED BY THE INVENTION

Since residues are generated when polymers are pyrolyzed using an extruder, it is necessary to collect the residues using a residue tank. Therefore, there is a need for a method to increase the efficiency in the residue collection.

Other problems and novel features will be apparent from the description of this specification and accompanying drawings. MEANS FOR SOLVING PROBLEMS

A pyrolysis system according to one embodiment includes a flow path unit configured to receive a residue from a storage unit, a collection unit configured to collect the residue discharged from the flow path unit, and a conveyance unit configured to convey the residue received from the storage unit toward the collection unit.

A pyrolysis system for a waste plastic according to one embodiment includes a first extruder capable of pyrolyzing a waste plastic, a second extruder to which a residue after pyrolysis discharged from the first extruder is fed, and a collection unit detachably attached to the second extruder and configured to collect the residue.

### EFFECTS OF THE INVENTION

According to one embodiment of this application, it is possible to efficiently replace a residue collection unit.

According to another embodiment of this application, it is possible to efficiently replace a residue collection unit.

### BRIEF DESCRIPTIONS OF THE DRAWINGS

[FIG. 1] is an explanatory diagram illustrating an overall configuration of a pyrolysis system according to the first embodiment.
[FIG. 2] is an explanatory diagram illustrating a state where residues are collected by the pyrolysis system in FIG. 1.
[FIG. 3] is a cross-sectional view illustrating a state where a waste object is discharged from a discharge die of a collection machine in FIG. 1.
[FIG. 4] is an explanatory diagram illustrating a structure of a residue tank used in the pyrolysis system in FIG. 1.
[FIG. 5] is an explanatory diagram illustrating residue tanks and a switching valve of a pyrolysis system according to the second embodiment.
[FIG. 6] is an explanatory diagram illustrating a state where residues are collected by a pyrolysis system according to the third embodiment.
[FIG. 7] is a cross-sectional view illustrating a state where a waste object is collected into an upstream tank according to a modification of the pyrolysis system in FIG. 1.

### DETAILED DESCRIPTION OF PREFERRED EMBODIMENTS

### [First Embodiment]

Hereinafter, a pyrolysis system 10 according to the first embodiment of this disclosure will be described with reference to drawings.

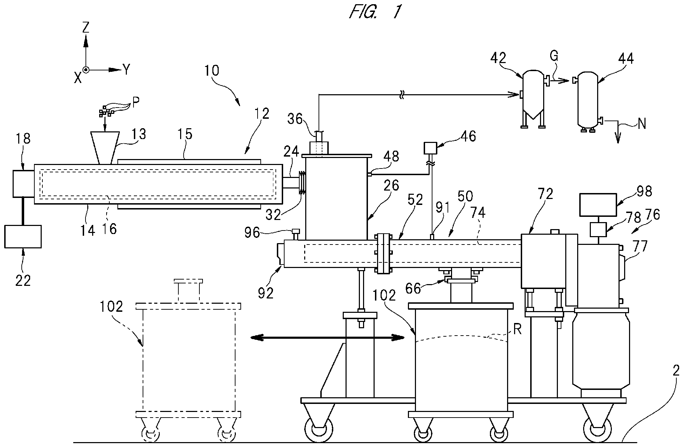

As illustrated in FIG. 1, the pyrolysis system 10 includes an extruder 12, a buffer chamber 26, a pipe 36, a drain pot 42, a heat exchanger 44, a collection machine 50, and a residue tank 102.

The pyrolysis system 10 is installed on a floor surface 2 of a factory. In the following, each direction will be defined and the arrangement of each configuration will be described on the assumption that the floor surface 2 is a horizontal plane. The pyrolysis system 10 is also an example of a pyrolysis system for a waste plastic.

### <Extruder>

The extruder 12 is an example of a pyrolysis apparatus configured to pyrolyze a waste plastic P. The waste plastic P is an example of a resin material. The extruder 12 includes a hopper 13, a cylinder 14, a screw 16, a drive mechanism unit 18, and an extruder control unit 22. The extruder 12 pyrolyzes and extrudes the waste plastic P. In the following description, a conveying direction of a residue R to be described later is defined as a Y direction. The Y direction is the horizontal direction. A base end side of an arrow Y corresponds to an upstream side. A tip end side of the arrow Y corresponds to a downstream side.

An up-down direction perpendicular to the conveying direction and parallel to the vertical direction is defined as a Z direction. A base end side of an arrow Z corresponds to a lower side. A tip end side of the arrow Z corresponds to an upper side. A left-right direction perpendicular to both the conveying direction and the up-down direction is defined as an X direction. The X direction is the horizontal direction. A base end side of an arrow X corresponds to a left side of the extruder 12 when viewed from the upstream side in the conveying direction. A tip end side of the arrow X corresponds to a right side of the extruder 12 when viewed from the upstream side in the conveying direction.

The hopper 13 is connected to the cylinder 14. The hopper 13 is capable of supplying the waste plastic P into the cylinder 14. Examples of the waste plastic P include plastic products discarded after use in ordinary households and others and plastic wastes generated in the process of manufacturing plastic products (parts that cannot be used as products).

The cylinder 14 is made up of a plurality of cylinder blocks. The plurality of cylinder blocks are arranged and connected from the upstream side to the downstream side in the conveying direction. A heater 15 is provided on the outer periphery of the cylinder 14. A discharge pipe 24 is connected to a downstream end of the cylinder 14.

A heating temperature of the heater 15 is controlled by the extruder control unit 22. The heater 15 is capable of heating the waste plastic P inside the cylinder 14. Specifically, the heater 15 heats the waste plastic P via the cylinder 14 such that the waste plastic P is pyrolyzed.

The screw 16 is rotatably provided inside the cylinder 14. As an example, two screws 16 are arranged side by side in the left-right direction. In other words, the extruder 12 is a twinscrew extruder. The two screws 16 are arranged so as to mesh with each other.

The drive mechanism unit 18 includes a motor. The drive mechanism unit 18 rotates the two screws 16. As the two screws 16 are rotated, the waste plastic P is kneaded and conveyed to the downstream side in the conveying direction.

The extruder control unit 22 includes a CPU (Central Processing Unit), a memory, and a storage. In the extruder control unit 22, the CPU executes a program stored in the memory, thereby controlling the operation of the heater 15 and the drive mechanism unit 18. In other words, the extruder control unit 22 can control the temperature of the waste plastic P inside the cylinder 14 and the conveying speed (extrusion speed) of the waste plastic P. Note that the waste plastic P is continuously pyrolyzed by the shear heat generated by the screw 16 and the heat applied by the heater 15.

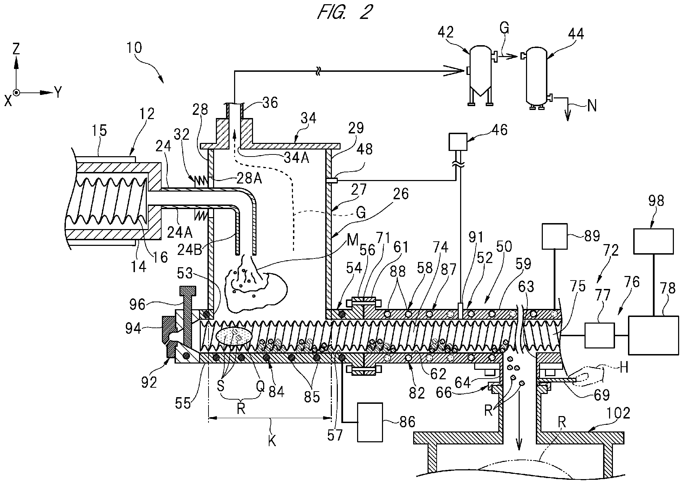

As illustrated in FIG. 2, the discharge pipe 24 is bent into an L-shape. The discharge pipe 24 includes a horizontal portion 24A extending from the cylinder 14 in the conveying direction and a vertical portion 24B extending downward in the up-down direction from a downstream end of the horizontal portion 24A. A part of the horizontal portion 24A and the vertical portion 24B are arranged inside the buffer chamber 26.

### <Buffer Chamber>

The buffer chamber 26 is an example of a storage unit configured to store the residue R discharged from the extruder 12. The residue R will be described later. Note that, in the present embodiment, as an example, the buffer chamber 26 is described as being included as a part of the extruder 12, but the buffer chamber 26 does not have to be included as a part of the extruder 12.

The buffer chamber 26 includes a cylindrical portion 27, a seal portion 32, and a lid portion 34. The cylindrical portion 27 is formed in a square cylindrical shape with the upper and lower ends in the up-down direction open. The cylindrical portion 27 includes a side wall 28 and a side wall 29. A through hole 28A which penetrates through the side wall 28 in the conveying direction is formed in the side wall 28. The horizontal portion 24A is inserted into the through hole 28A. A nozzle 48 is provided in the side wall 29. The nozzle 48 injects nitrogen supplied from a nitrogen supply unit 46 into the buffer chamber 26. By injecting nitrogen into the buffer chamber 26, deterioration in quality of the material to be recovered due to oxidation and others can be suppressed.

The seal portion 32 is made of, for example, a bellows-shaped rubber member and is expandable and contractible in the conveying direction. The seal portion 32 seals the gap between the horizontal portion 24A and an edge of the through hole 28A. When the relative positions of the discharge pipe 24 and the buffer chamber 26 are misaligned, the seal portion 32 expands or contracts, thereby making the gap between the discharge pipe 24 and the buffer chamber 26 less likely to occur.

The lid portion 34 closes an upper end of the cylindrical portion 27 in the up-down direction. A gas exhaust port 34A which penetrates through the lid portion 34 in the up-down direction is formed in a part of the lid portion 34. In other words, the extruder 12 has the gas exhaust port 34A. A gas G generated by the pyrolysis of the waste plastic P is exhausted from the gas exhaust port 34A. The pipe 36 to be described later is connected to a part of the lid portion 34 on the downstream side relative to the gas exhaust port 34A. In the present embodiment, as an example, the entire lower end of the cylindrical portion 27 in the up-down direction is open toward a heating jacket 54 to be described later.

The residue R is generated by pyrolyzing the waste plastic P. Specifically, as the waste plastic P is pyrolyzed, a mixture M is discharged into the buffer chamber 26. The mixture M refers to a mixture that contains at least two of the gas G, a liquid Q, and a solid S.

The residue R refers to the mixture M from which the gas G is eliminated. In the present embodiment, the residue R is, for example, the solid S or the liquid Q. Note that the residue R may be the solid S and the liquid Q. In addition, if the waste plastic P contains a foreign matter other than the object to be recovered, the material generated by pyrolysis of the foreign matter is included in the residue R.

### <Pipe>

One end of the pipe 36 is connected to an edge of the gas exhaust port 34A. The other end of the pipe 36 is connected to the drain pot 42 to be described later. The drain pot 42 is connected to the heat exchanger 44 to be described later. The volume of the gas G is reduced due to condensation of the gas G in the heat exchanger 44 (condensation vacuum occurs), so that the inside of the pipe 36 is put into a negative pressure state. Therefore, the gas G in the buffer chamber 26 flows to the drain pot 42 and the heat exchanger 44 through the pipe 36 without using a vacuum pump. When a vacuum pump is used for the purpose of actively reducing the pressure inside the pipe 36, the vacuum pump may be provided on the downstream side relative to the heat exchanger 44 or on the upstream side relative to the drain pot 42.

### <Drain Pot and Heat Exchanger>

In the drain pot 42, moisture (drain) contained in the gas G is recovered. The gas G from which the moisture has been recovered is sent to the heat exchanger 44. In the heat exchanger 44, the gas G sent from the drain pot 42 is cooled. The gas G is cooled by, for example, water cooling. The gas G inside the heat exchanger 44 is condensed by cooling and becomes a liquid substance N. If the recovered liquid substance N contains a monomer, the monomer can be polymerized in another apparatus and reused as a polymer.

### <Collection Machine>

The collection machine 50 is an example of an extruder. The residue R after pyrolysis discharged from the extruder 12 is fed to the collection machine 50. As an example, the collection machine 50 includes a flow path unit 52, a conveyance unit 72, a temperature adjustment unit 82, an upstream discharge unit 92, and a collection machine control unit 98.

### (Flow Path Unit)

The flow path unit 52 is a cylinder extending in the conveying direction. An inlet 53 is formed in an upper part of the flow path unit 52 in the up-down direction on the upstream side. The inlet 53 is a through hole which penetrates through a wall portion 55 to be described later in the up-down direction. A lower end of the buffer chamber 26 in the up-down direction is attached to an edge of the inlet 53. As a result, the residue R inside the buffer chamber 26 falls into the flow path unit 52 through the inlet 53. In other words, the flow path unit 52 receives the residue R from the buffer chamber 26. Further, the flow path unit 52 includes the heating jacket 54 and a cooling jacket 58.

The part of the flow path unit 52 on the upstream side relative to the center serves as the heating jacket 54. The heating jacket 54 has the cylindrical wall portion 55 and a flange 56 that protrudes outward from a downstream end of the wall portion 55. The inside of the wall portion 55 serves as an upstream flow path 57.

The part of the flow path unit 52 on the downstream side relative to the center serves as the cooling jacket 58. The cooling jacket 58 has a cylindrical wall portion 59 and a flange 61 that protrudes outward from an upstream end of the wall portion 59. A heat insulating material 71 is sandwiched between the flange 61 and the flange 56. Furthermore, the flange 61 and the flange 56 are connected to each other. The presence of the heat insulating material 71 suppresses the heat exchange between the flange 61 and the flange 56, so that it is possible to suppress the wasteful energy consumption in the heating in the heating jacket 54 and the cooling in the cooling jacket 58.

The inside of the wall portion 59 serves as a downstream flow path 62. The upstream flow path 57 and the downstream flow path 62 have approximately the same flow path cross-sectional area and are connected to each other. A residue discharge port 63 is formed in a lower part of the wall portion 59 in the up-down direction on the downstream side.

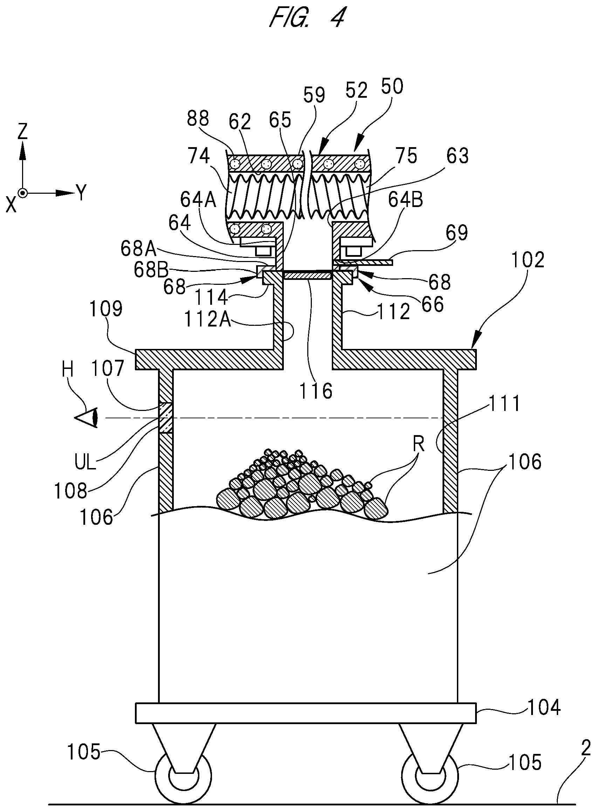

As illustrated in FIG. 4, a discharge pipe 64 is provided on the wall portion 59. The discharge pipe 64 extends downward in the up-down direction from an edge of the residue discharge port 63 of the wall portion 59. The discharge pipe 64 has an outer peripheral surface 64A. A slit 64B which penetrates through the discharge pipe 64 in the conveying direction is formed in a part of the discharge pipe 64.

The inside of the discharge pipe 64 serves as a discharge path 65. The discharge path 65 and the downstream flow path 62 are connected to each other. An attaching/detaching portion 66 is provided at a lower end of the discharge pipe 64 in the up-down direction. In other words, the flow path unit 52 has the attaching/detaching portion 66.

As an example, the attaching/detaching portion 66 is made up of two contact portions 68 provided on the outer peripheral surface 64A. The contact portions 68 each have a horizontal wall 68A extending from the outer peripheral surface 64A in the conveying direction and a vertical wall 68B extending downward from a tip of the horizontal wall 68A in the up-down direction.

In the attaching/detaching portion 66, a flange 114 to be described later is moved to the left in the left-right direction and the two contact portions 68 come into contact with the flange 114, thereby attaching the residue tank 102. In addition, in the attaching/detaching portion 66, the flange 114 is pulled out to the right in the left-right direction and the flange 114 is moved away from the two contact portions 68, thereby detaching the residue tank 102.

A slide gate 69 is provided in a part of the discharge pipe 64 above the attaching/detaching portion 66. As an example, the slide gate 69 is made of a flat plate large enough to close the discharge path 65. The slide gate 69 is supported on an edge of the slit 64B and can move back and forth in the conveying direction.

The slide gate 69 closes the discharge path 65 by moving toward the upstream side in the conveying direction. Also, the slide gate 69 opens the discharge path 65 by moving toward the downstream side in the conveying direction. The slide gate 69 may be operated manually by an operator H (FIG. 2) or automatically by a driving device such as a motor.

### (Conveyance Unit)

As illustrated in FIG. 2, the conveyance unit 72 conveys the residue R received from the buffer chamber 26 toward the residue tank 102 to be described later. As an example, the conveyance unit 72 includes two screws 74 extending in the conveying direction, a reverse screw 75, and a drive unit 76. Note that only one screw 74 is illustrated in FIG. 2.

The two screws 74 are an example of a conveyance member rotatably provided in the flow path unit 52. The two screws 74 are arranged to mesh with each other, and convey the residue R to the downstream side in the conveying direction when rotated. The upstream portions of the two screws 74 face the buffer chamber 26 in the up-down direction.

The reverse screw 75 is provided on the downstream side relative to the two screws 74 and on the upstream side relative to the drive unit 76 in the conveying direction. Note that the reverse screw 75 has a vane in the opposite direction to the vanes of the screws 74. The single screw on which the vane of the screw 74 and the vane of the reverse screw 75 are formed together may be used.

An upstream end of the reverse screw 75 is located at a position that faces the residue discharge port 63 in the Z direction. The reverse screw 75 is rotated by the drive unit 76 to convey the residue R toward the residue discharge port 63. In other words, the reverse screw 75 blocks the residue R flowing in the conveying direction between the two screws 74 and the drive unit 76, thereby effectively causing the residue R to fall into the residue discharge port 63.

The drive unit 76 is located on the downstream side relative to the flow path unit 52, the screws 74, and the reverse screw 75. Also, the drive unit 76 is located on the downstream side relative to a water cooling pipe 88 to be described later. The drive unit 76 is capable of rotating the two screws 74 and the reverse screw 75. Specifically, the drive unit 76 includes a motor 77 connected to the two screws 74 and a motor controller 78 configured to control the rotation of the motor 77.

The motor controller 78 can switch the motor 77 between the forward rotation and the reverse rotation. In the present embodiment, the forward rotation of the motor 77 refers to the rotation of the motor 77 when the two screws 74 convey the residue R to the downstream side in the conveying direction and the reverse screw 75 conveys the residue R to the upstream side in the conveying direction. The reverse rotation of the motor 77 refers to the rotation of the motor 77 when the two screws 74 convey the residue R to the upstream side in the conveying direction. Note that the transmission of driving force from the motor 77 to the reverse screw 75 may be interrupted during the reverse rotation of the motor 77.

### (Temperature Adjustment Unit)

The temperature adjustment unit 82 is capable of adjusting the temperature of the residue R conveyed by the conveyance unit 72. The collection machine control unit 98 controls the operation of the temperature adjustment unit 82. Specifically, the temperature adjustment unit 82 includes a heating unit 84 and a cooling unit 87. The heating unit 84 is provided in the heating jacket 54. The cooling unit 87 is provided in the cooling jacket 58. In other words, the heating unit 84 is located on the upstream side relative to the cooling unit 87 in the conveying direction.

The heating unit 84 includes a heater 85 and a power supply unit 86. The power supply unit 86 supplies power to the heater 85. The heater 85 is provided inside the wall portion 55. The heater 85 is an example of a heating unit. The heater 85 has a heating element that is curved and bent in accordance with the shape of the wall portion 55.

When power is supplied from the power supply unit 86, the heater 85 generates heat to heat the residue R via the wall portion 55. In other words, the heating unit 84 heats the residue **R.** Note that the amount of heat generated by the heater 85 is controlled by the collection machine control unit 98 such that the temperature of the residue R heated by the heater 85 is within a set range.

The cooling unit 87 includes a water cooling pipe 88 and a supply pump 89. The supply pump 89 supplies water into the water cooling pipe 88. The water cooling pipe 88 is provided inside the wall portion 59. The water cooling pipe 88 is an example of a cooling unit. The water cooling pipe 88 is a pipe that is curved and bent in accordance with the shape of the wall portion 59. When the supply pump 89 is operated, water flows inside the water cooling pipe 88.

The water inside the water cooling pipe 88 cools the residue R by cooling the wall portion 59. In other words, the cooling unit 87 cools the residue **R.** Note that a part of the water cooling pipe 88 is aligned with the discharge path 65 (FIG. 4) in the up-down direction. In other words, the water cooling pipe 88 is provided in the flow path unit 52 such that the residue R discharged from the flow path unit 52 toward the residue tank 102 can be cooled by the water flowing inside the water cooling pipe 88.

The region where the flow path unit 52 and the buffer chamber 26 overlap when the buffer chamber 26 is projected onto the flow path unit 52 in the up-down direction is defined as a virtual region K. In FIG. 2, the range of the virtual region K in the conveying direction is indicated by an arrow K. At least a part of the heater 85 is located inside the virtual region K. The water cooling pipe 88 is located outside the virtual region **K.**

A nozzle 91 is provided at a part of the wall portion 59 in the section in which the cooling unit 87 is provided. As an example, the nozzle 91 injects nitrogen supplied from the nitrogen supply unit 46 into the downstream flow path 62. In the downstream flow path 62, nitrogen is injected from the nozzle 91, thereby preventing flammable gas from flowing into the residue tank 102.

### (Upstream Discharge Unit)

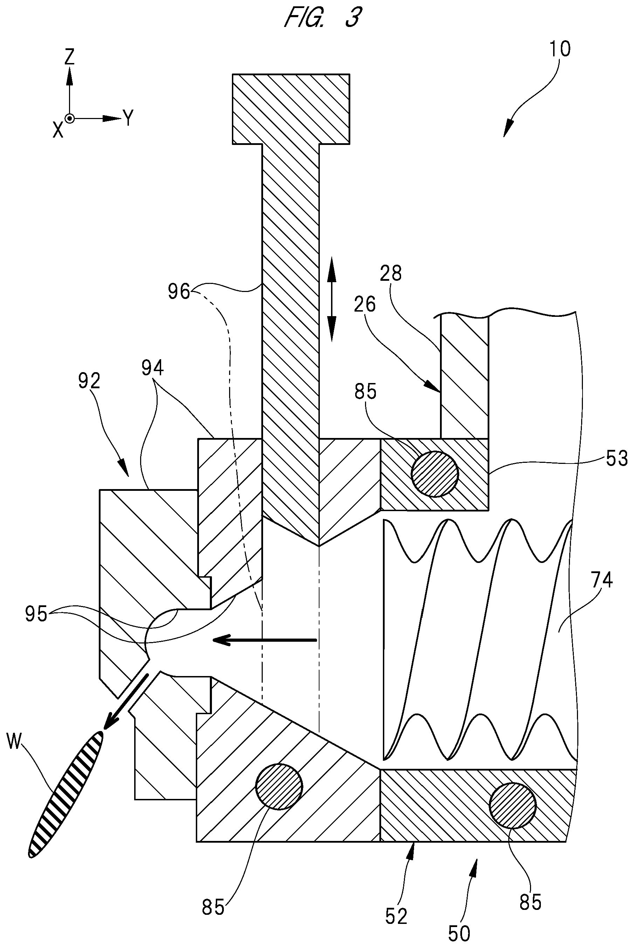

As illustrated in FIG. 3, the upstream discharge unit 92 is provided at the upstream end of the flow path unit 52. The upstream discharge unit 92 is capable of discharging a part of the residue R (FIG. 2) and a waste object W from the flow path unit 52. The waste object W is a material discharged to the buffer chamber 26 in an insufficiently pyrolyzed state, and refers to a material that is not subject to reuse. Note that it is preferable that the upstream discharge unit 92 discharges only the waste object W, but it is difficult to separate the waste object W from the residue R. For this reason, the upstream discharge unit 92 may discharge a part of the residue R as described above.

As an example, the upstream discharge unit 92 includes a discharge die 94 and a gate valve 96. The heater 85 is provided in a part of the discharge die 94. The discharge die 94 includes an upstream discharge path 95 through which the waste object W and the residue R (FIG. 2) flow. A flow path cross-sectional area of the upstream discharge path 95 gradually decreases from the downstream side to the upstream side in the conveying direction. The waste object W and the residue R inside the upstream discharge unit 92 are discharged so as to be pushed outward from the upstream discharge unit 92 during the reverse rotation of the screw 74.

The gate valve 96 is movably provided in the discharge die 94. The gate valve 96 can move upward and downward in the up-down direction. The gate valve 96 may be operated manually by the operator H (FIG. 2) or automatically using a motor or the like. When the motor 77 (FIG. 2) rotates forward, the gate valve 96 is moved downward, thereby closing the upstream discharge path 95. When the motor 77 rotates reversely, the gate valve 96 is moved upward, thereby opening the upstream discharge path 95.

### (Collection Machine Control Unit)

As illustrated in FIG. 2, as an example, the collection machine control unit 98 controls the rotation of the motor 77 via the motor controller 78. The control of the rotation of the motor 77 includes control of the start of rotation, the stop of rotation, the rotation speed, and the rotation direction (forward rotation, reverse rotation). Note that the collection machine control unit 98 includes a CPU, a memory, and a storage. The CPU executes a program stored in the memory, thereby controlling the rotation of the motor 77.

### <Residue Tank>

The residue tank 102 is an example of a collection unit configured to collect the residue R discharged from the flow path unit 52. The residue tank 102 is detachably attached to the attaching/detaching portion 66 of the flow path unit 52.

As illustrated in FIG. 4, as an example, the residue tank 102 has a bottom wall 104, a plurality of casters 105, a side wall 106, an upper wall 109, an inlet 112, the flange 114, and a lid member 116.

The bottom wall 104 is formed in a flat plate shape along the left-right direction and the conveying direction. The plurality of casters 105 are rotatably attached to the bottom wall 104. The side wall 106 stands upright on the upper side of the bottom wall 104 in the up-down direction. The side wall 106 is formed in a cylindrical shape when viewed from the above in the up-down direction. The shape of the side wall 106 may be either a cylindrical shape or a square cylindrical shape. The upper wall 109 covers the space surrounded by the side wall 106. The space surrounded by the bottom wall 104, the side wall 106, and the upper wall 109 refers to a storage space 111. The residue R is stored in the storage space 111.

A through hole 107 which penetrates through the side wall 106 is formed in a part of the side wall 106 in the circumferential direction so as to be located on an upper side relative to the center of the side wall 106 in the up-down direction. A transparent member 108 is fitted into the through hole 107. As an example, the transparent member 108 is made of glass. In addition, an upper limit line UL extending in the horizontal direction (as an example, the left-right direction) is displayed on the transparent member 108.

The operator H visually observes the inside of the residue tank 102 through the transparent member 108. If at least a part of the residue R is present above the upper limit line UL, the operator H determines that the residue tank 102 is full. If the entire residue R is located below the upper limit line UL, the operator H determines that the residue tank 102 is in a state of being able to store the residue.

The inlet 112 is formed in a cylindrical shape having a central axis along the up-down direction. The shape of the inlet 112 may be either a cylindrical shape or a square cylindrical shape. In addition, the inlet 112 extends upward in the up-down direction from the center of the upper wall 109 in the left-right direction and the conveying direction. A space 112A inside the inlet 112 and the storage space 111 are connected to each other. The flange 114 protrudes outward from an upper end of the inlet 112 in the up-down direction. The flange 114 has a shape and size capable of coming into contact with the contact portion 68.

The lid member 116 is provided at the upper end of the inlet 112 in the up-down direction. As an example, the lid member 116 is provided so as to be slidable in the left-right direction. The inlet 112 is opened or closed by moving the lid member 116 in the left-right direction. When the lid member 116 is placed at the close position, the flow of the residue R into the residue tank 102 is restricted. When the lid member 116 is placed at the open position, the flow of the residue R into the residue tank 102 is allowed. In the present embodiment, as an example, the operator H moves the lid member 116.

### <Operation of First Embodiment>

The operation of the pyrolysis system 10 according to the first embodiment will be described with reference to FIG. 1 to FIG. 4.

When each unit of the pyrolysis system 10 is starting up, there is a possibility that the waste object W is generated due to insufficient pyrolysis in the extruder 12. For this reason, the screw 74 is reversely rotated in the open state where the gate valve 96 is moved upward. As a result, the waste object W discharged from the extruder 12 to the buffer chamber 26 is discharged to the outside from the upstream discharge path 95, making the waste object W less likely to be collected in the residue tank 102.

When the pyrolysis system 10 is in operation, the screw 74 is rotated forward in the closed state where the gate valve 96 is moved downward. The waste plastic P fed into the hopper 13 is pyrolyzed inside the cylinder 14 and then discharged from the cylinder 14 as the mixture M. The mixture M discharged from the cylinder 14 flows into the buffer chamber 26 through the discharge pipe 24.

The gas G of the mixture M passes through the pipe 36 in the negative pressure state and is sent to the heat exchanger 44 via the drain pot 42. The gas G is then condensed by cooling in the heat exchanger 44 and is recovered as the liquid substance N.

Meanwhile, the residue R (solid S or liquid Q) of the mixture M is conveyed to the downstream side in the conveying direction as the screw 74 rotates. At this time, since the residue R is heated in the heating jacket 54, sticking of the residue R to the buffer chamber 26 and the cylinder 14 due to solidification of the liquid Q and others is suppressed. In other words, the conveying state of the residue R is stabilized.

In the cooling jacket 58, the liquid Q gradually solidifies. As a result, most of the residue R conveyed to the position facing the discharge pipe 64 of the flow path unit 52 is discharged as the solid S and falls through the discharge pipe 64 into the residue tank 102.

The temperature of the residue R collected in the residue tank 102 is lower than the temperature at the time it was discharged into the buffer chamber 26. Therefore, even if the residue tank 102 becomes full of the residue R, the temperature of the discharge pipe 64 and the residue tank 102 is prevented from becoming high, making it possible to easily move the slide gate 69 to the close position and easily replace the residue tank 102.

The residue R discharged to the buffer chamber 26 is conveyed by the conveyance unit 72. Therefore, the residue R is less likely to remain inside the buffer chamber 26, allowing the extruder 12 to operate continuously.

As described above, in the pyrolysis system 10, the conveyance unit 72 moves the residue R discharged from the extruder 12 from the buffer chamber 26 toward the residue tank 102. Furthermore, the flow path unit 52 functions as a buffer unit that temporarily stores the residue **R.** In other words, the collection machine 50 functions as a buffer unit that temporarily stores the residue R. This prevents the buffer chamber 26 from becoming full of the residue R, and also ensures time to replace the residue tank 102, enabling the residue tank 102 to be replaced efficiently. As an example of efficiently replacing the residue tank 102, the residue tank 102 can be replaced while continuing the operation of the extruder 12.

In the pyrolysis system 10, the gas G generated by pyrolysis is exhausted from the gas exhaust port 34A through the pipe 36, so that the gas G is less likely to remain inside the buffer chamber 26. This makes it possible to prevent the pressure inside the buffer chamber 26 from increasing.

In the pyrolysis system 10, the temperature adjustment unit 82 can adjust the temperature of the residue R being conveyed. Therefore, as compared with a configuration in which the temperature of the residue R is not adjusted, fluctuations in the temperature of the residue R during conveyance are suppressed, so that the conveyance state of the residue R by the conveyance unit 72 can be stabilized.

According to the pyrolysis system 10, since the temperature adjustment unit 82 includes the water cooling pipe 88, the temperature of the residue R during conveyance can be reduced, so that the increase in temperature of the residue tank 102 in which the residue R has been collected can be suppressed. Furthermore, since the water cooling pipe 88 is provided inside the wall portion 59, the cooling efficiency can be improved in comparison with a configuration in which the residue R is cooled from the outside of the wall portion 59.

In the pyrolysis system 10, the heater 85 is located on the upstream side relative to the water cooling pipe 88. The amount of heat generated by the heater 85 is controlled by the collection machine control unit 98 such that the temperature of the residue R heated by the heater 85 is within a set range. This prevents a sudden drop in temperature of the residue R and ensures the fluidity of the residue R. In this way, it becomes easier for the conveyance unit 72 to convey the residue R, and it is possible to prevent the residue R from remaining inside the flow path unit 52.

Furthermore, since at least a part of the heater 85 is located inside the virtual region K and the water cooling pipe 88 is located outside the virtual region K, the buffer chamber 26 is less likely to be cooled. This makes it possible to prevent a part of the residue R from sticking to the inner surface of the buffer chamber 26.

The upstream portion of the flow path unit 52 and the buffer chamber 26 are adjacent to each other. Also, the high-temperature residue R after pyrolysis flows into the upstream portion of the flow path unit 52. As a result, the upstream portion of the flow path unit 52 becomes hotter than the downstream portion. Here, in the pyrolysis system 10, the drive unit 76 is located on the downstream side relative to the flow path unit 52. Therefore, it is possible to prevent the drive unit 76 from being heated as compared with the case where the drive unit 76 is located on the upstream side relative to the flow path unit 52. In addition, the drive unit 76 is less likely to be heated because it is located on the downstream side relative to the cooling unit 87 (water cooling pipe 88).

In the pyrolysis system 10, the upstream discharge unit 92 is provided at the upstream end of the flow path unit 52. When the motor 77 rotates reversely, the residue R is discharged from the upstream discharge unit 92. Therefore, even if the waste object W is generated when the extruder 12 is started, the waste object W is discharged from the upstream discharge unit 92, so that it is possible to prevent the waste object W from being collected in the residue tank 102.

In the pyrolysis system 10, the upstream discharge unit 92 includes the gate valve 96. Also, the gate valve 96 closes the upstream discharge path 95 when the motor 77 rotates forward, and opens the upstream discharge path 95 when the motor 77 rotates reversely. This not only makes it possible to discharge the waste object W, but also makes it possible to prevent the outside air from flowing into the flow path unit 52 from the upstream discharge path 95 during the conveyance of the residue R.

### [Second Embodiment]

A pyrolysis system 120 according to the second embodiment of this disclosure will be described with reference to drawings. Note that the configurations that are the same as or similar to those in the first embodiment are denoted by the same reference characters and the descriptions thereof will be omitted.

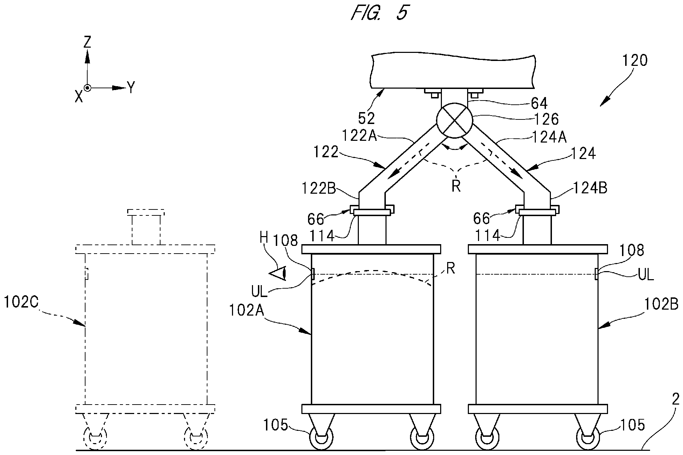

FIG. 5 illustrates a part of the pyrolysis system 120 according to the second embodiment. The pyrolysis system 120 and the pyrolysis system 10 (FIG. 1) differ in the configurations following the discharge pipe 64. Therefore, the configurations following the discharge pipe 64 will be described.

The flow path unit 52 is provided with the discharge pipe 64, a downstream discharge pipe 122, a downstream discharge pipe 124, and a switching valve 126. In addition, as an example, the pyrolysis system 120 uses residue tanks 102A, 102B, and 102C. Note that the residue tanks 102A, 102B, and 102C each have the same configuration as the residue tank 102 (FIG. 4).

The downstream discharge pipe 122 and the downstream discharge pipe 124 are an example of a plurality of downstream discharge units. The downstream discharge pipe 122 and the downstream discharge pipe 124 are each connected to a lower end of the discharge pipe 64 in the up-down direction. The downstream discharge pipe 122 is an example of one downstream discharge unit and an example of the other downstream discharge unit. The downstream discharge pipe 124 is an example of the other downstream discharge unit and an example of one downstream discharge unit.

The downstream discharge pipe 122 has an inclined portion 122A and a vertical portion 122B. The inclined portion 122A extends diagonally downward from the discharge pipe 64 to the upstream side in the conveying direction. The vertical portion 122B extends downward in the up-down direction from a lower end of the inclined portion 122A. The attaching/detaching portion 66 is provided at a lower end of the vertical portion 122B. The residue tank 102A is attached to the downstream discharge pipe 122.

The downstream discharge pipe 124 has an inclined portion 124A and a vertical portion 124B. The inclined portion 124A extends diagonally downward from the discharge pipe 64 to the downstream side in the conveying direction. The vertical portion 124B extends downward in the up-down direction from a lower end of the inclined portion 124A. The attaching/detaching portion 66 is provided at a lower end of the vertical portion 124B. The residue tank 102B is attached to the downstream discharge pipe 124.

The switching valve 126 is provided at a location (branch) where the downstream discharge pipe 122 and the downstream discharge pipe 124 are connected to the discharge pipe 64. The switching valve 126 is an example of a switching unit. Specifically, the switching valve 126 can be operated (rotated) by the operator H to switch the flow path, to which the residue R is discharged from the discharge pipe 64, from the downstream discharge pipe 122 to the downstream discharge pipe 124 or from the downstream discharge pipe 124 to the downstream discharge pipe 122.

### <Operation of Second Embodiment>

The operation of the pyrolysis system 120 according to the second embodiment will be described with reference to FIG. 5.

By operating the switching valve 126 to one side in the rotation direction, the inside of the downstream discharge pipe 122 and the inside of the discharge pipe 64 are connected, and the downstream discharge pipe 124 is closed. When the pyrolysis system 120 is in operation, the residue R discharged from the flow path unit 52 to the discharge pipe 64 flows through the downstream discharge pipe 122 and is collected in the residue tank 102A. Here, if the operator H visually determines that the residue tank 102A is full, he or she operates the switching valve 126 to the other side in the rotation direction. In this way, the inside of the downstream discharge pipe 124 and the inside of the discharge pipe 64 are connected, and the downstream discharge pipe 122 is closed. Then, the residue R is collected in the residue tank 102B.

While the residue R is being collected in the residue tank 102B, the operator H detaches the residue tank 102A from the attaching/detaching portion 66. Then, the operator H attaches the empty residue tank 102C to the attaching/detaching portion 66 of the downstream discharge pipe 122. When the residue tank 102B becomes full of the residue R, the residue tank 102B is replaced with the residue tank 102C through the same procedure.

As described above, in the pyrolysis system 120, the switching valve 126 is operated to switch the flow path, to which the residue R is discharged, from the downstream discharge pipe 122 to the downstream discharge pipe 124 or from the downstream discharge pipe 124 to the downstream discharge pipe 122. Therefore, when the residue R is flowing through one of the downstream discharge pipe 122 and the downstream discharge pipe 124, the residue R does not flow through the other pipe, and it is thus possible to ensure time to replace the residue tank 102 even if the discharge of the residue R from the discharge pipe 64 continues.

### [Third Embodiment]

A pyrolysis system 130 according to the third embodiment of this disclosure will be described with reference to drawings. Note that the configurations that are the same as or similar to those in the first embodiment are denoted by the same reference characters and the descriptions thereof will be omitted.

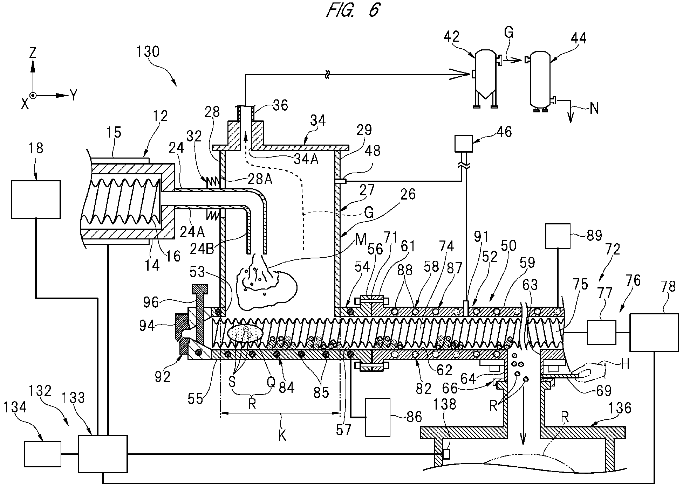

FIG. 6 illustrates a part of the pyrolysis system 130 according to the third embodiment. The pyrolysis system 130 differs from the pyrolysis system 10 (FIG. 1) in that a control unit 132 and a residue tank 136 are provided.

The control unit 132 has the functions of the extruder control unit 22 (FIG. 1) and the collection machine control unit 98 (FIG. 1). Therefore, the extruder control unit 22 and the collection machine control unit 98 are not provided in the pyrolysis system 130. The control unit 132 includes a main body unit 133 and a display unit 134.

The main body unit 133 includes a CPU, a memory, and a storage. The CPU executes a program stored in the memory, thereby controlling the operation of the extruder 12 and the collection machine 50. Detection information from a detection sensor 138 to be described later is input to the main body unit 133.

The display unit 134 is, for example, a touch panel. Therefore, the display unit 134 not only can display information about the extruder 12 and the collection machine 50, but also can operate the extruder 12 and the collection machine 50 (input of information).

In the residue tank 136, the transparent member 108 (FIG. 4) of the residue tank 102 (FIG. 4) is replaced with the detection sensor 138. The detection sensor 138 is an optical sensor. As an example, the detection sensor 138 detects whether the top of the residue R accumulated inside the residue tank 136 has reached a preset full position. Then, if the position of the top of the residue R has reached the full position, the detection sensor 138 outputs a signal as full information to the main body unit 133.

### <Operation of Third Embodiment>

The operation of the pyrolysis system 130 according to the third embodiment will be described with reference to FIG. 6.

When the main body unit 133 receives the signal of full information from the detection sensor 138, it notifies that the residue tank 136 is full by displaying a warning indicating the full on the display unit 134. When the operator H sees the warning display, he or she moves the slide gate 69 to close the discharge pipe 64. Then, the operator H detaches the residue tank 136 from the attaching/detaching portion 66.

Furthermore, after the operator H attaches another empty residue tank 136 to the attaching/detaching portion 66, he or she moves the slide gate 69 to open the discharge pipe 64. In this way, the residue R is collected using the other residue tank 136. The warning display on the display unit 134 is cleared by the operator H operating the display unit 134. As described above, in the pyrolysis system 130, the operator H can know whether the residue tank 136 is full without visually checking the inside of the residue tank 136.

Note that the main body unit 133 may reduce the amount of residue R (mixture M) discharged from the extruder 12 to the buffer chamber 26 by performing the control to reduce the rotation speed of the screw 16 or the like when it receives the signal of full information. In this way, the residue tank 136 can be efficiently replaced. As an example of efficiently replacing the residue tank 136, the residue tank 136 can be replaced while continuing the operation of the extruder 12.

### [Modifications]

Hereinafter, modifications different from the first, second, and third embodiments of this disclosure will be described. Note that components that are the same as or similar to those in the first, second, and third embodiments are denoted by the same reference characters and the redundant descriptions thereof will be omitted.

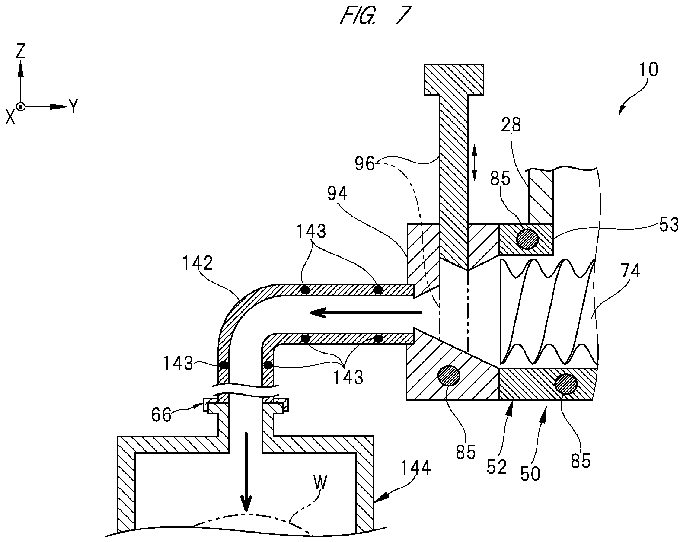

FIG. 7 illustrates a configuration in which a transport pipe 142 is connected to a part of the discharge die 94 as a modification of the pyrolysis system 10. The transport pipe 142 is bent downward in the up-down direction. A heater 143 is embedded in the transport pipe 142. The heater 143 heats the waste object W to a degree to keep it warm. The attaching/detaching portion 66 is provided at a lower end of the transport pipe 142 in the up-down direction.

An upstream tank 144 is attached to the attaching/detaching portion 66. The upstream tank 144 is similar to the residue tank 102 (FIG. 3). However, the waste object W is collected inside the upstream tank 144. In this way, the waste object W may be collected using the upstream tank 144 without discharging the waste object W outside the collection machine 50.

The resin material used in the pyrolysis systems 10, 120, and 130 is not limited to the waste plastic P, but may be other resin materials. The residue R is not limited to the solid S or the liquid Q, but may be the solid S and the liquid Q.

The pyrolysis apparatus is not limited to the apparatus that extrudes the material after pyrolysis to the outside of the apparatus like the extruder 12, and may be the apparatus that injects the material after pyrolysis to the outside of the apparatus and the apparatus that causes the material to flow to the outside of the apparatus.

Any buffer chamber 26 may be used as long as the residue R can flow out from the inside of the buffer chamber 26 to the heating jacket 54. Therefore, the entire lower end of the cylindrical portion 27 does not have to be open downward. For example, a bottom wall having a through hole formed therein may be provided at the lower end of the cylindrical portion 27 to cause the residue R flow out through the through hole. In addition, it is preferable that the buffer chamber 26 includes a temperature adjustment unit. The temperature adjustment unit adjusts the temperature inside the buffer chamber 26 to a target temperature by heating or cooling the buffer chamber 26 as necessary.

The screws 16 and 74 are not limited to being of the twinscrew type, and may be of the single-screw type or the multiple-screw type having three or more screws.

The pyrolysis system 130 may be provided with the downstream discharge pipe 122, the downstream discharge pipe 124, the switching valve 126, the residue tank 136, and a motor. The switching valve 126 is rotated by the motor. Here, the rotation (switching operation) of the switching valve 126 may be performed automatically using the signal of full information of the detection sensor 138 as a trigger signal to start driving the motor.

The pyrolysis systems 10, 120, and 130 do not always need to have the gas exhaust port 34A. For example, when the buffer chamber 26 is a large tank extending in the up-down direction, the upper part of the buffer chamber 26 serves as a storage unit in which the gas G is stored. In this configuration, it is not necessary to frequently exhaust the gas G, and thus the gas exhaust port 34A may not be required. Note that, when the gas G is to be recovered and used, the gas G needs to be exhausted from the buffer chamber 26. When the pressure inside the buffer chamber 26 becomes high, it is also possible to exhaust the gas G by operating the gate valve 96.

The pyrolysis systems 10, 120, and 130 do not always need to have the temperature adjustment unit 82, the heater 85, and the water cooling pipe 88. For example, when the flow path unit 52 is long in the conveying direction, the temperature of the residue R conveyed by the conveyance unit 72 gradually decreases as it is conveyed toward the downstream side. Therefore, the collection using the residue tank 102 is possible.

The heater 85 may be arranged outside the wall portion 55. Furthermore, the heater 85 is not limited to being arranged on the upstream side relative to the water cooling pipe 88. For example, it is also possible to make the conveyance of the residue R easier by providing the heater 85 on the downstream side relative to the water cooling pipe 88 in the conveying direction and heating the residue R by the heater 85. The water cooling pipe 88 may be arranged outside the wall portion 59. The entire heater 85 may be arranged inside the virtual region K. Furthermore, a part of the water cooling pipe 88 may be located inside the virtual region K.

The cooling unit is not limited to the water cooling pipe 88. Examples of the cooling unit may include one that uses a Peltier element for cooling and one that uses a fan air for cooling.

The drive unit 76 may be located on the upstream side relative to the water cooling pipe 88. Specifically, the drive unit 76 may be located on the upstream side relative to the flow path unit 52 in the conveying direction.

If the waste object W can be collected using the residue tank 102, the upstream discharge unit 92 may not be required.

### REFERENCE SIGNS LIST

2: floor surface, 10: pyrolysis system, 12: extruder, 13: hopper, 14: cylinder, 15: heater, 16: screw, 18: drive mechanism unit, 22: extruder control unit, 24: discharge pipe, 24A: horizontal portion, 24B: vertical portion, 26: buffer chamber, 27: cylindrical portion, 28: side wall, 28A: through hole, 29: side wall, 32: seal portion, 34: lid portion, 34A: gas exhaust port, 36: pipe, 42: drain pot, 44: heat exchanger, 46: nitrogen supply unit, 48: nozzle, 50: collection machine, 52: flow path unit, 53: inlet, 54: heating jacket, 55: wall portion, 56: flange, 57: upstream flow path, 58: cooling jacket, 59: wall portion, 61: flange, 62: downstream flow path, 63: residue discharge port, 64: discharge pipe, 64A: outer peripheral surface, 64B: slit, 65: discharge path, 66: attaching/detaching portion, 68: contact portion, 68A: horizontal wall, 68B: vertical wall, 69: slide gate, 71: heat insulating material, 72: conveyance unit, 74: screw, 75: reverse screw, 76: drive unit, 77: motor, 78: motor controller, 82: temperature adjustment unit, 84: heating unit, 85: heater, 86: power supply unit, 87: cooling unit, 88: water cooling pipe, 89: supply pump, 91: nozzle, 92: upstream discharge unit, 94: discharge die, 95: upstream discharge path, 96: gate valve, 98: collection machine control unit, 102: residue tank, 102A: residue tank, 102B: residue tank, 102C: residue tank, 104: bottom wall, 105: caster, 106: side wall, 107: through hole, 108: transparent member, 109: upper wall, 111: storage space, 112: inlet, 112A: space, 114: flange, 116: lid member, 120: pyrolysis system, 122: downstream discharge pipe, 122A: inclined portion, 122B: vertical section, 124: downstream discharge pipe, 124A: inclined portion, 124B: vertical portion, 126: switching valve, 130: pyrolysis system, 132: control unit, 133: main body unit, 134: display unit, 136: residue tank, 138: detection sensor, 142: transport pipe, 143: heater, 144: upstream tank, G: gas, H: operator, K: virtual region, M: mixture, N: liquid substance, P: waste plastic, Q: liquid, R: residue, S: solid, UL: upper limit line, W: waste object

## Claims

1. A pyrolysis system comprising:
a pyrolysis apparatus configured to pyrolyze a resin material;
a storage unit configured to store a residue discharged from the pyrolysis apparatus in which the resin material is pyrolyzed;
a flow path unit configured to receive the residue from the storage unit;
a collection unit detachably attached to the flow path unit and configured to collect the residue discharged from the flow path unit; and
a conveyance unit configured to convey the residue received from the storage unit toward the collection unit.

2. The pyrolysis system according to claim 1,
wherein the storage unit has a gas exhaust port, and
wherein a gas generated by the pyrolysis of the resin material is exhausted from the gas exhaust port.

3. The pyrolysis system according to claim 2, further comprising a temperature adjustment unit capable of adjusting a temperature of the residue conveyed by the conveyance unit.

4. The pyrolysis system according to claim 3,
wherein the temperature adjustment unit includes a cooling unit provided in the flow path unit and configured to cool the residue.

5. The pyrolysis system according to claim 4,
wherein the flow path unit has a cylindrical wall portion, and
wherein the cooling unit is provided inside the wall portion.

6. The pyrolysis system according to claim 4,
wherein the temperature adjustment unit includes a heating unit provided in the flow path unit and configured to heat the residue, and
wherein the heating unit is located on an upstream side relative to the cooling unit in a conveying direction of the residue.

7. The pyrolysis system according to claim 6,
wherein a region where the flow path unit and the storage unit overlap when the storage unit is projected onto the flow path unit is defined as a virtual region,
wherein at least a part of the heating unit is located inside the virtual region, and
wherein the cooling unit is located outside the virtual region.

8. The pyrolysis system according to any one of claims 4 to 7,
wherein the conveyance unit includes:
a conveyance member rotatably provided in the flow path unit and configured to convey the residue; and
a drive unit located on a downstream side relative to the cooling unit in the conveying direction of the residue and configured to rotate the conveyance member.

9. The pyrolysis system according to claim 8,
wherein the drive unit includes a motor switchable between a forward rotation and a reverse rotation,
wherein the conveyance member conveys the residue to the downstream side in the conveying direction during the forward rotation of the motor and conveys the residue to the upstream side in the conveying direction during the reverse rotation of the motor, and
wherein an upstream discharge unit capable of discharging the residue from the flow path unit is provided at an upstream end of the flow path unit in the conveying direction.

10. The pyrolysis system according to claim 9,
wherein the upstream discharge unit includes:
a discharge die having an upstream discharge path through which the residue flows; and
a gate valve capable of opening and closing the upstream discharge path, and
wherein the upstream discharge path is closed by the gate valve during the forward rotation of the motor, and the upstream discharge path is opened during the reverse rotation of the motor.

11. The pyrolysis system according to claim 1,
wherein the flow path unit includes:
a plurality of downstream discharge units to which the collection unit can be detachably attached; and
a switching unit capable of switching a flow path, to which the residue is discharged, from one of the downstream discharge units to the other of the downstream discharge units.

12. A pyrolysis system for a waste plastic comprising:
a first extruder capable of pyrolyzing a waste plastic;
a second extruder to which a residue after pyrolysis discharged from the first extruder is fed; and
a collection unit detachably attached to the second extruder and configured to collect the residue.

13. The pyrolysis system for the waste plastic according to claim 12,
wherein the first extruder has a gas exhaust port, and
wherein a gas generated by the pyrolysis of the waste plastic is exhausted from the gas exhaust port.

14. The pyrolysis system for the waste plastic according to claim 13,
wherein the residue is a solid or a liquid.
